Europäisches Patentamt

European Patent Office

Office européen des brevets

(19)

(11) Publication number: **0 131 874**
**A1**

(12) # EUROPEAN PATENT APPLICATION

(21) Application number: **84107940.3**

(22) Date of filing: **06.07.84**

(51) Int. Cl.⁴: **F 16 L 33/02**

(30) Priority: **13.07.83 IT 2203683**
**30.03.84 IT 2031084**

(43) Date of publication of application:
**23.01.85 Bulletin 85/4**

(84) Designated Contracting States:
**DE FR GB**

(71) Applicant: **INDUSTRIE PIRELLI S.p.A.**
**Piazzale Cadorna, 5**
**I-20123 Milan(IT)**

(72) Inventor: **Tangorra, Giorgio**
**Via Ramazzotti, 12**
**Monza (Milano)(IT)**

(74) Representative: **Mariani, Giorgio, Dr. et al,**
**INDUSTRIE PIRELLI S.p.A. Direzione Brevetti Piazzale**
**Cadorna, 5**
**I-20123 Milano(IT)**

(54) Blocking element for acting as a seal between the end part of a hose and a rigid internal core.

(57) A blocking element (3) that acts as a seal, disposed between a hose (2) and a rigid internal core (4), comprising two flanges, or suchlike, joined together, with being open in the centre for enclosing a hose.

Each flange comprises a radially outer portion (19) - that is substantially inextensible, and further radially inner portion (20) - formed by a plurality of teeth 21. The radially inner and outer portions, can either be in a single piece, or else, in distinct parts one from the other (53, 57).

The element passes from an at-rest condition to the one of closing the hose around the core - when the two inextensible portions are subjected to opposed axial thrusts.

Fig.1

EP 0 131 874 A1

0131874

BLOCKING ELEMENT FOR ACTING AS A SEAL BETWEEN THE END PART OF A HOSE AND A RIGID INTERNAL CORE

## Specification

The present invention refers to a blocking element acting as a seal between the terminal parts of a flexible hose and a rigid core disposed inside the said hose.

As is known, the terminal parts of a hose are connected to the other parts through a rigid core or tang introduced into the hose - for contrasting the thrust of opposed means apt for sealing shut the hose-walls upon the tang. The tang, in its turn, can comprise a through-hole for allowing to connect another hose portion - in such a way as to establish, for example, a hydraulic connection between two hoses.

The locking and blocking means can be of diverse types, for example, they comprise a metallic sleeve, of bronze or some suchlike material, that embraces the terminal part of the hose - which becomes successively deformed, in such a way as to radially compress, with a uniform pressure, the hose-walls against the tang.

In any case, the locking means can result as being insufficiently 'locking'- particularly in instances where the terminal part of the hose forms an integrant part of any installations which are subject to vibrations and shifting movements. In fact, in such instances, these frequent oscillations can, with the passage of time, determine a gradual slipping in those parts intended for locking one with the other.

In other circumstances – for example, in those instances where the locking means are formed by pipe-wrench bands – i.e. by metallic elements in the form of metal-straps, wherein it is possible to reduce the diameter and to maintain a certain locking-action through screw-systems disposed at the extremities of the metal-straps, a deformation is obtained of the hose-walls against the tang, only in the proximity of the connection between nut-and-bolt, on the clamp itself; whereas, the remaining portion remains locked with a lesser force. In this situation, there is obtained a dis-uniformity in the compression of the hose against the tang – and hence, an imperfect sealing.

Moreover, in some cases it has been verified that the locking element of the hose is not capable of maintaining, with the passage of time, the elastic deformation load inducted on it – i.e. the grip weakens in an undesired manner, with the passage of time.

In other solutions, there also exists the drawback of it not being possible to continue using the terminal parts of the hose for other purposes – since it is no longer possible to salvage the locking element.

Therefore, the aim of the present invention is a blocking-element, disposed between the terminal extremities of a hose and a tang, that is simultaneously, simply constructed, easy to use for any whatsoever civil or industrial application, and which is capable of solving all the existing drawbacks.

What forms the object of the present invention is a blocking-element that acts as a seal between the terminal parts of a polymeric hose having deformable walls – and a rigid internal core, characterized by the fact of comprising two flanges, or suchlike, joined together, with each flange comprising a first radially outer part - in the form of an annular element made from an inextensible material, and a second part - formed by a plurality of teeth, said teeth connecting the two annular elements one with the other, and said blocking-element passing from an at-rest configuration to that of the hose being closed-around-the-core, when said two annular elements are drawn closer - by the axially opposed thrusts, for determining the penetration of the teeth into the polymeric material of said terminal hose-part.

The blocking-element of the invention, as described above, is apt for establishing a sealed-connection between any whatsoever hollow longiform body - particularly, for example, between the extremities of a polymeric material hose and a rigid internal tang. In one example of realization, the two flanges could substantially present the aspect of two frustoconical cups, joined together along their bases, forming an opening - with dimensions corresponding to the outer dimensions of the terminal part of the hose.

The surfaces of the two flanges comprise a first, annular-part, having an inextensible solid-section, and a second, inner-part, that is clefted.

The sealed connection between the longiform body and the rigid inner core, is effectuated by applying thrusts that are axially opposed to one another, on the two flanges.

During this phase, whereby the two flanges 'draw nearer' to each other, it is verified that the teeth urge, with their extremities, upon the terminal part of the hose, with rotating practically around the points-of-contact of said hose - from an inclined at-rest position with respect to a cylindrical generatrix of tne hose, passing through the cited point-of-contact, to a final-position, differentiated by an angle of 90° with respect to the same generatrix. The final-position is reached when the two flanges reduce, or eliminate the clefts existing between them in the at-rest position.

Still during the phase of drawing nearer together, there would hence be had the tendency of the teeth to take their extremity that is near the annular portion of the same flange, to a greater height with respect to the at-rest condition.

Actually, since the annular portions of the flanges are inextensible and hence, shifted to a height that is unchanged with respect to the longitudinal axis of the hose, it is inevitably had that the teeth cannot do other than load the hose walls - with sinking inside them, for a determined tract of the total thickness, and with receiving, in their turn, the reaction-thrusts determined by the rigidity of the tang - with the consequent load being transmitted to the annular portions of the same flanges.

In this way, a sure grip is obtained between the flanges of the element and the tang, by compressing the layer of polymeric material that comprises the walls of the terminal hose-part.

According to a variation in realization, the two flanges are comprised by two inextensible rings, joined together by teeth, having the form of metallic-straps. The rings and the metallic-straps form distinct parts one from the other, and they are made of diverse materials.

The present invention will be better comprehended from the following detailed description - made solely by way of nonlimiting example, with referring to the FIGURES in the attached drawing TABLES whereby:-

FIG. 1    shows a perspective view of the blocking-element of the invention as applied to the terminal part of the hose;

FIG. 2    shows a perspective view of one of the possible forms of realization of a blocking-element that is applicable to the terminal part of the hose of FIG. 1.

FIG. 3    shows a longitudinal section of the hose's terminal part, joined to the relative tang with the blocking-element of the invention;

FIG. 4    shows an axial section of a blocking-element that is applicable to the terminal part of the hose of FIG. 3;

FIG. 5    hows a partial frontal view of some details in the blocking-element of the invention;

FIG. 6    schematically shows the working principle of the invention;

FIG. 7    shows the blocking-element in the closed position on the terminal part of the hose;

FIG. 8     shows the details of FIG. 5, in the blocked position of the element;

FIG. 9     shows a perspective view of the closing of the blocking-element shown in FIG. 1;

FIG. 10     shows a longitudinal section of a further form of realization of the blocking-element joined to a terminal part of the hose;

FIG. 11     hows a longitudinal section of the blocking-element of FIG. 10 in the closed position;

FIGS. 12     to 18 show further realizations of the blocking-element

FIG. 19     shows a perspective view of the blocking-element joined to the terminal part of the hose, relative to a variation of realization

FIG. 20     shows a partial perspective view of some details of the blocking element of FIG. 19;

FIGS. 21     and 22 show transversal longitudinal sections of some variations relative to FIG. 19, both before as well as and after the application of opposed axial forces to the blocking-element;

FIGS. 23     and 24 show a variation of the blocking-element, both before and after the application of opposed forces

FIGS. 25     and 26 show in a perspective view, two further variations.

The invention will now be described with reference to the means for determining a sealed-connection between a hollow longiform body - for example, a hose having deformable walls - and a rigid core disposed inside said body.

The hose comprises plastomeric walls, in rubber or in plastic. The walls can also be provided with reinforcements of any type, such as: cords, wires or monofilaments, directed in the longitudinal sense and in the transversal direction - or even a combination of said directions, in a textile or metallic material, or even with the reinforcing structure in the form of charges - that are dispersed or else oriented, in KEVLAR, or in textile fibres of another type.

The hoses in question could be of the type used, at low pressures, for agricultural appliances, for example: for irrigation purposes; or at high pressures, for industrial applications - with pressures, during exercise, from 150 $Kg/cm^2$ to 1000 $Kg/cm^2$ and over.

The rigid core could be comprised by a tang - made of a rigid, plastic or metallic material, having its outer form made to correspond with the inner dimensions of the hollow body into which it is introduced, having a solid-section for tightly sealing the extremity of said longiform body, or even a hollow, open-section provided - i.e. with a central conduit, passing from one extremity to the other, for effecting the joining with the other similar body or the connection between two diverse parts - such as, for example, a rubber hose for filling the water into the tub of a washing-machine and a metallic tap.

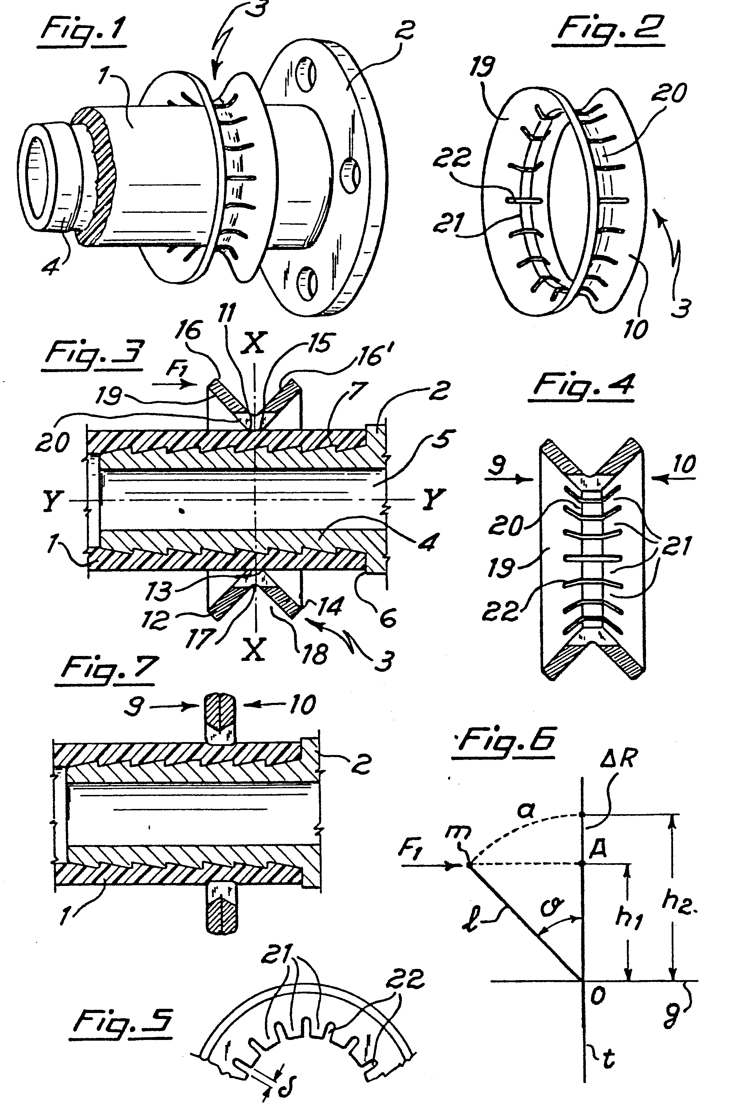

By way of example, for clarifying the parts described, further on there will be shown in FIG. 1, a perspective view of the terminal part of a hose 1, connected to a rigid tang 2 comprising a blocking-element 3 apt for determining the closing of the hose walls around the tang.

In FIG. 2, still in a further perspective view, there is shown a further form of realization of the blocking-element connectable to the terminal part of a hose - for the purpose of sealing it to the inner tang.

Reference is now made to the detailed description of the invention, with regard to a longitudinal hose section seen in FIG. 3 and to the attached FIG. 4 - wherein there is shown a longitudinal section of the blocking-element only.

In the attached FIGURES, there will be used the identical numerical-references, for marking the elements that carry out the same function - even if they are disposed in a diverse manner according to a particular realization.

The hose 1 is utilized for high pressures and it comprises several reinforcing-layers (not shown) - formed generally: by an elastomeric underlying layer, by a layer of longitudinal metallic wires disposed in spirals or braids - with angles of about 54° with respect to the hose axis, and by an outer elastomeric sheath.

The tang 2 comprises a cylindrical portion 4 having a through-hole 5, a ledge 6 on the terminal surface of the hose extremity, a cylindrical outer surface 7 - that is more or less indented for improving the grip on the hose walls.

The tang 2, according to a particular application, serves for making a connection with the hose extremity that forms part of another installation.

The blocking-element 3, in the more general form of realization comprises two flanges 9 and 10. On the surface, each flange is circumscribed by two circular edges – indicated with 11 and 12 for the flange 9, and with 13 and 14 for the flange 10.

In the example, the flanges are metallic – of annealed steel. In other solutions, the flanges could be of another equivalent rigid material – for example, of nylon.

The two flanges are joined to each other to form a single piece, since the inner edges 11 and 13, constitute circumferential lines that delimit a cylindrical tract 15 forming an opening – in correspondence with the outer diameter of the hose's terminal extremity 1.

The two flanges result as being divergent – from the inner edges towards the outer edge, with determining, in the section shown in FIG. 3, a substantially "V-shaped" form, with the wings 16 and 16' of the "V" being symmetrical with respect to a plane X-X – that is perpendicular to the longitudinal axis of the element 3, coincident with the hose's longitudinal axis Y-Y.

In the particular realization of FIG. 3, the radially outer surfaces of the flanges terminate with a sharp-corner 17 – and originate an annular groove 18.

The fundamental characteristics of the invention foresee a particular form of realization for the flanges, each one of which - as is indicated in the previous FIGURE and in FIGS. 3 and 4, comprises two successive parts between the inner and outer edges - and precisely: for the flange 9, a first radially outer part 19 having a substantially inextensible solid-section, and a second radially clefted part 20, formed by a plurality of teeth 21. The number of said teeth is variable - from three till a higher value of upto thirty-two, that are alternately spaced apart with voids or hollows 22. The teeth issue forth in cantilever fashion from the annular part 19.

The flange 10 is shaped similarly. The teeth 21 are extended, in a convergent manner at the diverse points lying on the axis Y-Y, and they reach the inner edge where they are spaced apart, one fom the other, by a tract $\delta$ (FIG. 5) forming $\underline{N}$ clefts - for example, sixteen.

The closing of the element - for determining the blocking and the sealing between the elastomeric walls of the material forming the extremities of the hose 1 and the rigid tang 2, is carried out by applyiing two opposed axial thrusts that act in opposite directions on the two flanges.

For simplicity sake, the functioning is seen relatively only to the effects of the thrust $\underline{F1}$ on the flange - as seen on the left-hand side of FIG. 3. The behaviour of the other symmetrical flange has been omitted for the sake of simplifying the situation.

The functioning of the blocking-element is described by making reference to a particular form of example, represented in quite a schematic way in FIG. 6 - whereby:

- the line $\underline{l}$ represents the outline on the plane of the FIGURE, of one of the two flanges of the blocking-element, in a plane containing the longitudinal axis;

- $\underline{o}$ represents the point-of-contact between the extremity of a tooth and a line $\underline{g}$ representing the outer generatrix of the terminal of the cylindrical hose;

- $\underline{t}$ represents the outline of a plane perpendicular to the longitudinal axis of the blocking-element, also coincident with the axis of symmetry X-X represented in FIG. 3, surmising that the cylindrical tract 15 has a negligible and assimilable length - hence, at one point;

- $\underline{m}$ is a point at the upper extremity of the outline $\underline{l}$ - that very schematically represents one of the points of the ring constituting the substantially inextensible part of each of the two flanges of the element.

Let us suppose now - for convenience sake and for better clarifying the invention, that the material forming the annular portion is elastomeric - instead of being a rigid material.

Let us suppose that the hose is rigid. By making this hypothesis, under the thrust $\underline{F1}$ the flange would rotate in the clockwise sense around the hinge $\underline{O}$, with describing an arc $\underline{a}$ and the ring $\underline{m}$ (the rod $\underline{l}$ being metallic and hence, indeformable) would expand for conforming to the passage from $\underline{h1}$ to the greater height $\underline{h2}$, relatively to the generatrix line $\underline{g}$.

0131874

According to the hypothesis made, the ring m would react and, again as a result of its elasticity, it would tend to reduce its diameter and force the rod to unload all the final stress on the rigid hose.

As a final result in the hypotheses made, no sealing effect, or moderate sealing, would be had between any eventual hose with the rigid walls and a rigid underlying core.

If we should now re-consider the more complete aspect of the invention and attribute - to the point m, the characteristic of its forming part of an inextensible steel ring, and - to the hose, the characteristic of comprising deformable walls - i.e. in elastomeric material - with or without any eventual reinforcing elements, it will immediately be verified that, following the application of the thrust F1, the rod 1 would still rotate in the clockwise sense, but the mass m, - due precisely to its inextensibility, would remain at the same height h1, with moving upto point A along the outline t.

In its turn, the clefted part of the flange - formed by the teeth, due to its also being radially non-compressible, will penetrate into the deformable walls of the hose for a tract $\Delta$ R that will be equal, in the schematization of FIG. 6, and with a simple trigonometrical operation, to $\Delta R = 1 (1 - \cos \vartheta)$: with $\vartheta$ being the at-rest angle of the flange, before the application of the thrust F1.

Now, if we should imagine extending what has been indicated in FIG. 6, to the entire flange, it would be verified immediately that all the teeth - due to the inextensibility of the first annular part of each flange, would sink even more gradually into the elastomeric material of the hose, by shifting with a centripetal movement – and hence, taking the radially inner extremities, that are disposed on the circumferential lines, even more closer with respect to the axis Y-Y of the element 3.

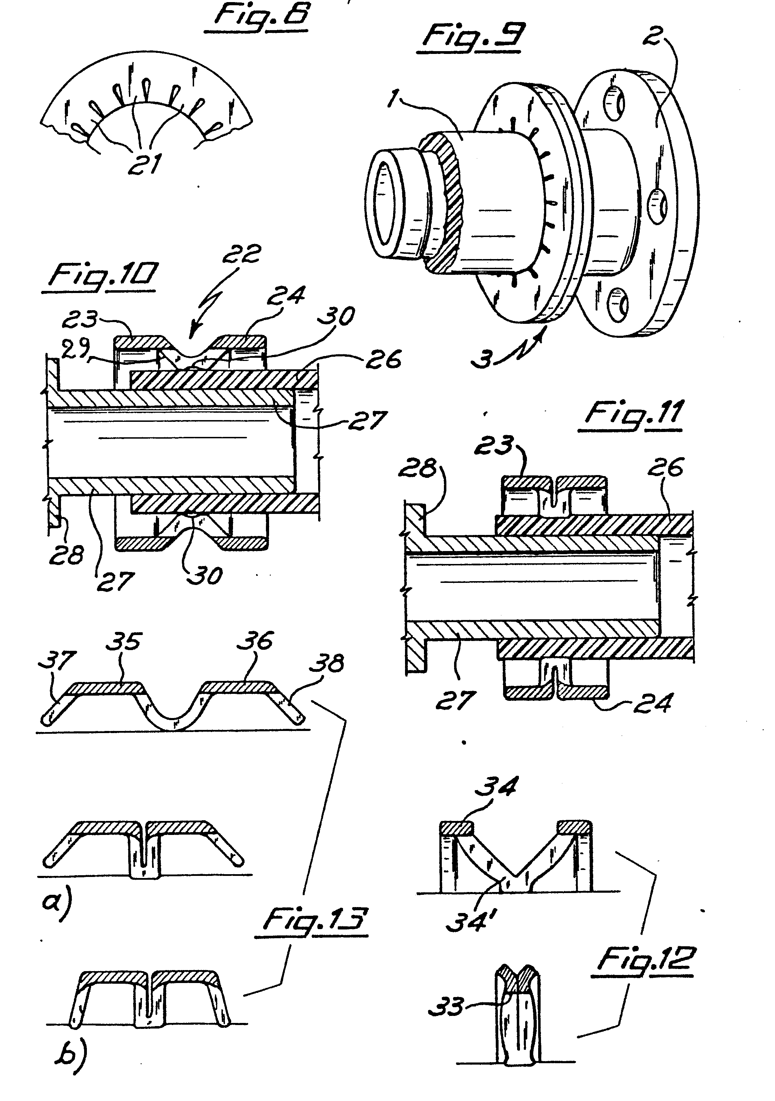

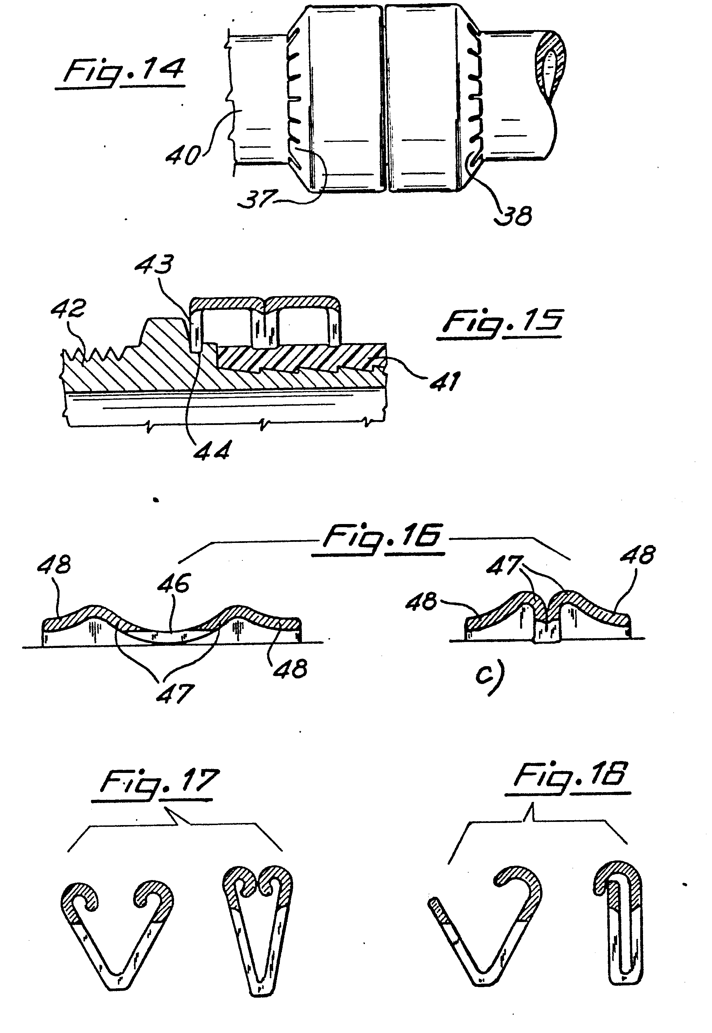

This centripetal shifting of the teeth is permitted till such time as a cleft $\delta$ does still exist between the teeth. However, such a movement will inevitably cease to be, when said clefts will be completely closed, as schematized in FIG. 8 – where there is shown the condition of those flanges that have eliminated the annular groove 18 in-between them, as is clearly schematized in FIG. 7; or as, for better clarification, has been shown in the perspective view of FIG. 9, where the closing of the blocking-element 3 of FIG. 1 is shown.

For determining the condition of maximum centripetal shifting of the teeth – and hence, the closing state of all the clefts $\underline{N}$, the condition to be respected is:

$$N \times \delta = 2\pi \times \Delta R$$

Referring now, solely by way of example, to what is shown in FIG. 6, the invention foresees that the blocking-element comprises angles-of-inclination for the outline $\underline{1}$ of the flange with respect to the axis X-X, comprised, for example, between 30° and 70°, and more preferably, between 45° and 65°.

In particular, what is included in the advantages of the invention, is the possibility of realizing blocking-elements having particular values for the angles-of-inclination, with respect to the plane X-X; said angles being suited for diverse and varied types of application. In fact, from the

formula: $\triangle R = \underline{1}(1 - \cos \vartheta)$, assuming that $\underline{1} = 1$, it is possible to obtain the following values of sinking $\triangle$ R, indicated in the TABLE given herebelow.

| $\vartheta$ | $\triangle R$ |
|---|---|
| 30° | 0,13 |
| 45° | 0,29 |
| 60° | 0,5 |
| 70° | 0,66 |

As can be seen, the invention offers the possibility of conforming it to diverse usages - for example, either on the the terminals of hoses - at high pressure, or those at low pressure; or in such instances where there could be required - for having a greater or lesser deformability of the material forming the hose walls, a respectively greater or lesser sinking, for guaranteeing the grip had upon the rigid internal pipe-fitting.

For example, the condition differentiated with the angle $\vartheta$ equal to 70°, allows the two flanges of the blocking-element - during their relative approaching, to develop the complexive stress acting upon the hose walls, with a greater entity as with respect, for example, to the condition that would be verified with the angle $\vartheta$ = 30°.

In fact, at each degree of rotation of the flanges - from the at-rest position to the relative approaching position, there always corresponds an unvaried shifting condition of the barycenter of the flange's annular inextensible part, with the consequence that the greater the angle is, the greater also will be the load that will gradually urge upon the hose walls, exciting a compressive action upon these walls and hence, against the tang - i.e. all this being at a parity with 1.

One advantage obtainable with our invention, is derived from the possibility existing of being able to carry-out the phases of drawing-closer the two flanges of the blocking-element, through the means of commonly used tools that are manually operable - for example, in the form of pliers or clamps - or, under the hypothesis of high axial thrusts being present, through the cited fluo-dynamically controlled, actioning instruments of the cylinder-piston type, or with two cylinders - the two pistons of which act from opposite sides, and with there being special thrusting surfaces at the extremities of the pistons themselves.

In general, it has also to be observed that, as a further advantageous aspect of the invention - for instance for the closing operation, axial thrusts of a high value are only requested at the start of the 'drawing-closer' between the flanges, since these thrusts then assume values of even smaller values.

In fact, with the progressing of said 'drawing-nearer' between the two flanges, the teeth - in being forced radially into the hose wall, tend to transmit the entire load of their elastic reaction against the rigid tang - with thus rendering the grip between the tube and the connection more efficacious. However, through progressively reducing the angle $\alpha$ , the complete closing of the wings of the blocking-element is facilitated.

This invention is not aimed solely at what has been illustrated in the previous FIGURES, since it is also possible to adopt the already expressed concepts even for other solutions.

To this purpose, in FIG. 10 there is shown a blocking-element 22 comprising - at the extremities of the two V-shaped wings of the two flanges, two protrusions in the form of cylindrical sleeves 23 and 24, having solid-sections.

The blocking-element 22, is applied externally to an elastomeric hose 26 that has - for a rigid core inside it, a metallic hose 27 connected through a nut 28 to a further hydraulic circuit.

The axially outermost surfaces 29, of the V-shaped wings, converge on two circumferential lines that are connected by a concave tract 30, towards the inside of the hose.

In FIG. 11, there is shown the blocking position - between the walls of the hose 26 and the walls of the metallic hose 27. As can be seen in said FIGURE, the sleeves 23 and 24 constitute the inextensible part of the invention - that is apt for determining the centripetal shiftings of the clefted parts of the element itself, inside of the deformable walls of the hose 26.

In FIG. 12, there is again shown a blocking-element in a further form of realization, whereby the surfaces - of the V-shaped wings that are axially outermost, are convex and present small sections - both, in correspondence of a solid-section in the form of the sleeve 34, as well as in the lower position 34' in the proximity of the radially innermost part of the teeth.

Following the shifting between the two flanges, a greater facility for the drawing-closer is had - due to the existence of those parts with a lesser section, that act like hinges. The final aspect of the blocking-element in the closed position, is shown again in FIG. 12 - where the protuberance 34 has undergone a small rotation around the hinge 33.

In FIG. 13 shown a further blocking-element of the previous FIGURE is shown, because of the fact of its comprising, at the axially outermost extremity of the sleeves 35 and 36, two conical clefted surfaces 37 and 38, that are provided - according to what has been explained previously, with a plurality of teeth that issue forth in cantilever fashion from the solid-sections 35 and 36.

In the positions (a) of the same FIG. 13, the blocking-element is shown, whereby the central part - i.e. the wings of the "V" that are provided with a toothing, are already gripped on a hose, since they have been drawn-closer together through the means of special tools inserted in-between the sleeves 35 and 36.

Successively, according to further operations, the end conical walls 37 and 38 that are provided with a toothing, can be acted upon for determining the passage from the condition (a) to the condition (b) - wherein the teeth of said parts undergo a sinking into the deformable material of the hose walls.

In a perspective view of FIG. 14, the element of FIG. 13 is shown as being apt for the jointing between one terminal part of an elastomeric hose - to a metallic connection 40 that acts as a rigid core. FIG. 14 shows the position whereby the flanges of the blocking-element, have undergone a drawing-closer together, and where the conical toothed parts 37 and 38, are substantially in an intermediate position - between that of FIG. (a) and that of FIG. (b).

In FIG. 15 there is shown still a further example of a connection - between the terminal elastomeric part 41 of a hose and a rigid tang 42. As can be clearly seen in this FIGURE, the blocking-element comprises a part 43 that has substantially a conical form (as shown in FIG. 13) that is apt for being inserted, with its toothing, into an annular zone 44 of the tang - for the purpose of increasing the capacity to resist any whatsoever type of slipping-off between the rigid tang 42 and the elastomeric element 41.

In FIG. 16, there is again shown a blocking-element as applied to a hose, provided internally with a rigid tang. In this FIGURE, the blocking-element again comprises a clefted part 46 constituted by two flanges - as has been indicated substantially before, and a part having an inextensible solid-section 47, that is provided with the offshoots 48. In the operative condition, the blocking-element is shown in the position (c).

The characteristics of the blocking-element - as shown in FIG. 16, besides constituting a system apt for contrasting angular shiftings of the element itself with respect to the longitudinal axis of the hose, constitutes moreover, a means for increasing the section - and hence, the inextensibility of the solid-part 47.

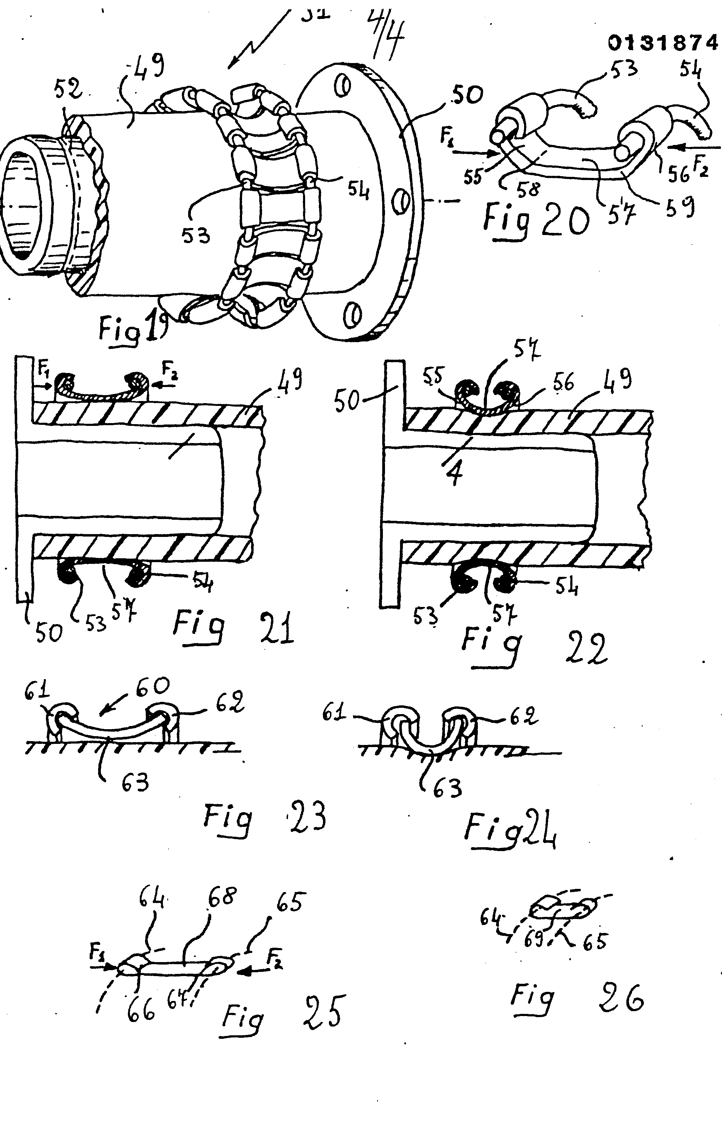

In FIGS. 17 and 18, there are indicated two further diverse solutions for the radially outermost parts of the flanges. As is seen in FIG. 17, the radially outermost parts of the flanges present C-shaped sections. These two C-shaped sections result as being opposite to each other: whereas, in FIG. 18, one of these two flanges has a C-shaped form, while the other flange has a form that has already been illustrated in the previously mentioned FIGURES.

As can be seen, from what has been shown in the same FIGURE, the element of FIG. 18 differs with respect to the one of FIG. 17 - since the C-shaped extension, of one of the flanges, can be coupled with the extremity of the other flange.

The solutions shown again in FIGS. 17 and 18, constitute further means for increasing the resistent section of the inextensible part of the blocking-element.

Of course, although not shown, all the other forms of realization - that can be drawn, for example, from the V-shaped profile of the TABLES in some of the previous FIGURES, are included in the inventive principle, since it is possible to determine other blocking-elements with the same functioning principle, whereby the two parts constituting the flanges are connected through diverse profiles - for example, concave or convex, towards the outside.

It is comprehensible how other blocking-elements are also included in the inventive principle, whereby the two flanges are realized in a symmetrical manner with respect to a plane that is vertical to the longitudinal axis of the through-element disposed between the two flanges. The element could comprise several pairs of flanges in a single piece.

The invention can be realized with rigid materials - such as ferrous, in particular with steel; or with rigid thermoplastic materials, such as nylon; or for example, even with cross-linked polypropylene - with adopting, from time to time, a material whose modulus was obviously higher than that of the hose - over which the enclosing must be effected.

Furthermore, the invention presents the advantage of its being realizable through simple operational processes which are obtainable according to one of the many possible examples available - initiating with a continuous steel sheet.

In this instance, it is possible to obtain a succession of discs having a central openings - through making use of special tools for boring.

In further phases, through utilizing drilling-tools, there can be obtained hollows apt for determining the formation of the plurality of teeth necessary for gripping on the terminal part of the hose.

These discs are thereupon subjected to drawing-operations - so as to obtain the finished shape of the blocking-element.

Furthermore, the blocking-element could be realized by initiating from metallic hoses, from structural-shapes, or from metallic-straps welded to one another.

The invention presents numerous advantages which are apt for overcoming all the known drawbacks that are common to devices belonging to the same field of application.

In fact, the particular distribution of the forces, as determined by the centripetal sinking of the teeth for becoming embedded in the elastomeric material, allows for resisting any whatsoever stresses or vibrations to which the terminal part of the hose may be subjected. In fact, any cause which tends to draw away the teeth from their gripped position on the elastomeric material, is strongly obstaculated by the presence of a ring – made of a substantially inextensible material, constituted by the annular portion of each flange, in steel or some other material having a sufficiently high modulus.

However, it is intended that, in themselves, said substantially inextensible portions possess a certain characteristic of elasticity – owing to which, in the presence of a contrasting force, their inextensibilities are capable of reacting immediately, with an elastic load apt for maintaining the hose walls tightly locked against the rigid tang.

A further advantage of the invention lies in the possibility of being able to effect the relative drawing-apart of the adjoining flanges, through the means of the insertion of a special tool. As can be comprehended, in this instance it is possible – through extracting the blocking-element, to thereupon recover the terminal part of the hose, especially when the cost of said terminal part should be very high; otherwise, said terminal part would obviously be lost – in any such instances when the blocking-element did not prove to be 'dis-insertable' from its gripped state with the terminal part of the hose itself.

It is also comprehensible how the inventive principle can be extended to blocking-elements wherein the two parts of each flange constitute distinct parts one from the other - i.e. the annular element is distinct from the inner part that forms the tooth. In other words, the flange, or such similar means, comprises several pieces.

For example, in FIG. 19, the numeral 49 illustrates the terminal part of a polymeric hose - more specifically elastomeric, associated to a tang 50 - that is necessary for joining-up, through a flange, with the other connection or suchlike element.

As usual, the tang comprises a core 52 inside the hose. Around the hose wall there is disposed a blocking-element 51 forming the object of the invention and apt for determining the sealed clamping between walls and tang.

The element 51 substantially comprises two flanges - or more generally speaking, two opposed units formed by two annular elements, and more particularly, by two inextensible-material rings 53 and 54, and by a plurality of teeth 55 and 56 - as results clearly visible from the perspective partial-view seen in FIG. 20.

In the form of realization in FIG. 20, the rings are constituted by any whatsoever plastic or metallic material, having a longiform shape, with a profile distinguished by a closed spiral which could be obtained through moulding the material, or through having recourse to the jointing of the two extremities of a monofilament, or more generally, a wire, or even of a core or several cores that are layed-up together.

In one example in particular, the rings are made of steel wires, or of KEVLAR cords.

For example, the teeth are realized by initiating from metallic-straps, or from metal sheets having a thickness of 1.5 mm or 2 mm, that are successively blanked into several metallic-straps.

The metallic-straps are then bent - for realizing the inclined tracts of the teeth 55 and 56, in a manner that converges towards the inside of the element 51 disposed in the mounting position around the hose.

The teeth of the two units or flanges, are then joined together by a tract 57 of the same metallic-strap that is directed along the longitudinal axis of the element itself - said tracts being rectilineal tracts destined for coming into contact, under pressure, with the deformable hose walls.

The various metallic-straps are then shaped further at their extremities so as to be able to be then bent in a loop around the rings 53 and 54 - as illustrated in the detail relative to the perspective view in FIG. 20.

Hence, the blocking-element 51 according to the invention, comprises a central wall formed by several tracts 57 - that are substantially parallel to the hose axis, and by two lateral parts - that are inclined with respect to the central parts, with the extremities of said lateral parts being contained inside annular inextensible elements, in such a way that - during the closing phase, said extremities can only undergo axial - and not radial, shiftings.

For example, in other forms of realization, there can be had discs presenting an annular inextensible peripherical-zone apt for containing the teeth, in such a way that the extremities of the teeth themselves - during the phase of their tightening over the hose, are constrained (as has been explained) to just shifting axially - as they are prevented from assuming radii beyond those that are permitted by the annular inextensible zone.

Moreover, the metallic-straps can be formed in such a way as to have a more or less open U-shape, with the teeth being less inclined with respect to what is illustrated in FIG. 20 - for example, according to a possible variation that has a substantially curvilinear profile, as can be seen in FIG. 21, and in such a way that - at the time of its tightening over the blocking-element, the central portion 57 shifts so as to draw closer to the hose-axis, for effecting a tightening action over the inner core 52.

The operation of closing the blocking-element 51 over the hose, is carried-out by exercising opposed axial thrusts F1 and F2, upon the two rings 53 and 54. Subsequent to these opposed axial thrusts F1 and F2, the two rings 53 and 54 draw-closer together and - since they are made from an inextensible material, they tend to cause the metallic-straps to bend towards the hose - and in particular, they tend to cause the lateral portions of the teeth 55 and 56, to rotate around the hinge lines 58 and 59. Consequently, the said elements having metallic-straps, tend to become disposed in a plane that is perpendicular to the hose axis, and - since they are unable to expand the rings 53 and 54 - that are made out of an inextensible material, they are forced to become even more embedded into the elastomeric material of the hose walls, with obviously also dragging along with them the tracts 57 that are parallel to the hose generatrix.

At the end of the phase for closing the blocking-element, all the element's teeth-extremities 58 and 59, are disposed on a circumference having a smaller diameter with respect to the initial one, and all the tracts 57 - for their entire extension, press down uniformly upon the hose wall, with pressing it against the cylindrical tract of the rigid tang.

Of course, the solution illustrated in FIGS. 20 and 21, also allows for having further variations.

In fact, FIG. 23 illustrated a blocking-element 60, where the annular elements 61 and 62 are obtained by the bending of a sheet in such a way as to present housing-slots - that are apt for containing the teeth of the metallic-straps.

In FIG. 24, the blocking-element 60 is illustrated in the step when the central part 63 tightens over the hose 1 - subsequent to applying the axial drawing-closer forces, on the elements.

In FIG. 25, there is illustrated a further example - for realizing the anchoring of the metallic-straps to two annular elements 64 and 65. In particular, as can be noted, the metallic-strap comprises, still at its extremity, two loops for being compactly closed around the ring-shaped elements 64 and 65.

Nevertheless, unlike what has been previously illustrated, the inclined tracts relative to the teeth, have not been pointed out. In fact, said inclined tracts become originated quite notably only when the opposed forces $\underline{F1}$ and $\underline{F2}$, acting upon the two rings 64 and 65, cause the two loops to rotate around the hinge-lines 66 and 67. These hinge-lines are obtained during the passage - from the zone having a greater resistance of the metallic-straps as differentiated by the two loop-edges, to the zone having a lesser resistance, constituted by the tract 68 that is substantially parallel to the generatrix of the terminal part of the hose.

In practice, the teeth are comprised by two loop-edges rotated at $90°$ and sunk in the elastomeric material of the hose wall - with a consequent dragging into said embedment also of the the tracts 68, that will be constrained to press with force upon the elastomeric part of the hose.

In FIG. 26, there is illustrated another example of realization, for the coupling-elements in-between two rings, that are destined for being sunk into the elastomeric material.

As can be seen in practice, the cylindrical tract 69 - that is parallel to the hose axis and which couples the two loops, is practically non-existing - or else, it has quite a modest extension. In a further realization of the present invention, it is possible to have several metallic-straps - disposed on several parallel rows - with always maintaining the metallic-straps of one row, intercalated with those of the adjacent row.

The invention, as illustrated in the variations shown in FIGS. 19 and 26, allow - for example, to attribute to the rings 5 and 6, mechanical characteristics that are completely independent of those relative to the metallic-straps used for coupling with the same said rings.

This signifies that to the ring 53 or to the ring 54, there can be attributed the characteristics of being 'notably indeformable' - in the instance of choosing a ring made of a rigid material, for example, of steel - which is practically indeformable.

On the other hand, it is possible to choose - for the metallic-straps forming the coupling-tract between the rings, materials that - although apt for supporting high peak loads for the embedding in the elastomeric material, are also deformable in order to obtain both the teeth as well as the loops for the coupling with the rings.

In practice, depending upon the circumstances, it is possible to choose for the rings, materials that have a diverse modulus to those relative to the metallic-straps, or even materials having a geometry that is extremely diverse, as has been rendered possible by the independence existing between the parts.

Hence, what is attainable is a blocking-element wherein the ring shaped parts 53 and 54 are obtained, for example, through moulding - while the parts having the form of metalic-straps, are obtained through blanking and thereafter, by drawing. The metallic-straps can be realized by selecting materials of various types: in copper, in aluminium, in steel - i.e. with same materials, or else, materials that are completely diverse from the material to which recourse was had for forming the rings - as is obtainable, for example, with nylon, or with KEVLAR, or with any other resistant material.

Therefore, the choice of the material for differentiating the metallic-straps, can be made independently from the choice relative to the material that is most suited for the annular elements.

According to the solution just stated, it is still possible to predispose to advantage, for the production in series of several rings, and for the production in series of several metallic-straps, and to thereafter proceed separately to produce the said distinct entities - and thence, their assembly which can be done either in the factory itself, or even carried out on the part of the client or any whatsoever user.

In particular moreover, the solution illustrated in FIGS. 25 and 26 - wherein modest protuberances of the blocking-element are pointed out - as with respect to the hose wall, allows for the total englobing of the element itself, with a thin covering elastomeric layer, or with a protective varnish for protecting the coupling itself from any eventual phenomena of corrosion. It is evident moreover, that the present solution, in obviating the having recourse to any milling operations for obtaining the alternating of voids and teeth necessary for the functioning, lends itself favourable for obtaining - on an industrial scale, blocking-elements apt for determining the coupling between the terminal part of a hose and an internal tang - for any whatsoever hose dimensions, and for any whatsoever capacity that is required for the hose.

Although there have been described here, certain particularly advantageous forms of realizing the invention, what has to be kept in mind is that, within the field of protection of this patent, there are also included any altenative variations derived from the given inventive principle, that are accessible to a technician of the field. In fact, it is obvious that the solution illustrated in the FIGS. 19 and 26, wherein special metallic-straps are coupled to the rings by flipped-up loops, could also be obtained with other equivalent means apt for determining the coupling of the said metallic-straps with said rings - for example, by welding, or with clamps, or suitable groovings.

According to some solutins, the coupling between the ring and the extremity of the metallic-strap, could be obtained by availing of a metallic fusion between the two cited parts, or through some mechanical connections of another kind.

What is also included in the inventive principle, is a solution whereby the rings and teeth, as illustrated and described, are formed by a single piece - that is obtained through fusing.

The invention could also be directed to the coupling of two conduits, or hoses, or suchlike organs in a rigid material - for example, in a rigid plastic, joined by a coupling-joint. In this instance, said joint could be realized by introducing a polymeric material liner in-between the two parts of the conduits or of the hose, and then, by tightening the element described on each of the two parts to be joined.

According to a further form of realization, the plates could have diverse forms to those illustrated - in particular, forms that are diverse to the rectangular one obtained

0131874

through blanking. Said plates could have a greater width relative to the end zones destined for forming the loop. For example, the extremities of the metallic-straps could be in the form of squares joined together by a narrower strip, or they can even have a circular form at their two extremities.

WHAT IS CLAIMED IS:

1. Blocking-element (3, 51) acting as a seal between the terminal parts of a hose (2) having deformable walls, and a rigid internal core (4, 52), characterized by the fact of comprising two flanges or suchlike, joined together, with each flange comprising a first radially outer part in the form of an annular element (19, 53, 54) made of an inextensible material, and a second part formed by a plurality of teeth (21, 55, 56), said teeth coupling the two annular elements between them; said blocking-element passing from an at-rest configuration to one of closing the hose around the core when the said two annular elements are drawn together by opposed axial thrusts for determining the penetration of the teeth into the polymeric material of said terminal part of the hose.

2. Blocking-element, as in CLAIM 1, characterized by the fact that the two metallic flanges in divergent positions, form an annular central groove (18) having a substantially V-shape.

3. Blocking-element (22), as in CLAIM 2, characterized by the fact that from the axially outer extremity of the two flanges, their depart two protuberances - with solid-section, in the form of cylindrical sleeves (23, 24), that are coaxial with the axis of the blocking-element itself.

4. Blocking-element, as in CLAIM 3, characterized by the fact that the teeth on the frontal surface of the flanges, have a convex inward profile, and present a smaller section in correspondence of the zone for coupling with the cited protuberances (34) and in the proximity (34') of an inner edge that determines the opening having a form corresponding to the outer diameter of the terminal part of the hose.

5.      Blocking-element, as in CLAIM 1, characterized by the fact that the frontal surfaces of the flange wings that are turned towards the longitudinal axis of the element, converge on two circumferential lines (30) which are connected together.

6.      Blocking-element acting as a seal, as in CLAIM 1, wherein the said flange comprises parts that are distinct from each other i.e. a first part formed by said annular element (53, 54) and a second part formed by said teeth (55, 56).

7.      Element, as in CLAIM 6, characterized by the fact that the said teeth are metallic-straps.

8.      Element, as in CLAIM 7, characterized by the fact that the said metallic-straps are loop-connected around said annular elements.

9.      Element, as in CLAIM 6, characterized by the fact that said annular elements are longiform bodies - in the form of cords, wires, or monofilaments that are closed at the two extremities for forming a closed spiral.

10.     Element, as in CLAIM 6, characterized by the fact that said teeth (55, 56) comprise two tracts that converge from the annular element towards the circumferential line of contact around said terminal part, said two converging tracts being joined by a central rectilineal tract (57) having a diameter corresponding to the outer diameter of said terminal

part.

Fig.1

Fig.2

Fig.3

Fig.4

Fig.7

Fig.6

Fig.5

_Fig.8_

21

_Fig.9_

1

2

3

_Fig.10_

22

23
29
24
30
26
27
28
27
30

_Fig.11_

28
23
26
27
24

37
35
36
38

34

a)

33

_Fig.13_

34'

b)

_Fig.12_

*Fig.14*

40

37                     38

43

42

*Fig.15*

41

44

*Fig.16*

48        46        47        48

48              48

47        c)

*Fig.17*                *Fig.18*

0131874

Fig 19

Fig 20

Fig 21

Fig 22

Fig 23

Fig 24

Fig 25

Fig 26

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | GB-A- 430 356 (HINDS)<br>* figures * | 1-3 | F 16 L 33/02 |
| | --- | | |
| A | US-A-4 226 449 (COLE) | | |
| | --- | | |
| A | US-A-1 699 690 (DAKE) | | |
| | ----- | | |

**TECHNICAL FIELDS SEARCHED (Int. Cl. 3)**

F 16 L
F 16 B
B 21 D

The present search report has been drawn up for all claims

| Place of search | Date of completion of the search | Examiner |
|---|---|---|
| THE HAGUE | 11-10-1984 | HUBEAU M.G. |